(19) Europäisches Patentamt
European Patent Office
Office européen des brevets

(11) **EP 4 129 672 A1**

(12) **EUROPEAN PATENT APPLICATION**
published in accordance with Art. 153(4) EPC

(43) Date of publication:
**08.02.2023 Bulletin 2023/06**

(21) Application number: **21779412.2**

(22) Date of filing: **29.03.2021**

(51) International Patent Classification (IPC):
**B32B 27/32** (1968.09)     **B65D 65/40** (1968.09)
**B32B 7/022** (2019.01)

(52) Cooperative Patent Classification (CPC):
**B32B 7/022; B32B 27/32; B65D 65/40;**
Y02W 30/80

(86) International application number:
**PCT/JP2021/013264**

(87) International publication number:
**WO 2021/200811 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2020   JP 2020060062
17.12.2020   JP 2020209113**

(71) Applicant: **SUMITOMO BAKELITE Co.Ltd.**
**Shinagawa-ku**
**Tokyo 140-0002 (JP)**

(72) Inventors:
• **OYA, Yoshimichi**
  **Tokyo 140-0002 (JP)**
• **MURATA, Ryuichi**
  **Tokyo 140-0002 (JP)**

(74) Representative: **Ter Meer Steinmeister & Partner**
**Patentanwälte mbB**
**Nymphenburger Straße 4**
**80335 München (DE)**

(54) **LAMINATED FILM**

(57)     A laminated film (1) includes a first resin layer (11) and a second resin layer (12). The first resin layer (11) and the second resin layer (12) each contain polyolefin-based resins of the same kind, and in a case in which a dynamic mechanical analysis is performed on the second resin layer (12) to measure an elastic modulus E'(100) at 100°C and an elastic modulus E'(110) at 110°C at a vibration frequency of 1 Hz, a value of E'(110)/E'(100) is equal to or more than 0.2.

FIG. 1

**Description**

Technical Field

The present invention relates to a laminated film.
Priority is claimed on Japanese Patent Application No. 2020-060062, filed on March 30, 2020, and Japanese Patent Application No. 2020-209113, filed on December 17, 2020, the contents of which are incorporated herein by reference.

Background Art

A laminated film composed of a plurality of resin layers laminated is widely used as a material for a package. A typical laminated film includes at least a sealant layer provided for heat-sealing an object to be sealed and an outer layer provided on an opposite side to a sealant layer side.
On the other hand, such laminated films for a package are produced and consumed in large quantities every day all over the world because of their high convenience, and a large amount of waste is produced after use. Producing waste has become an important issue to be solved from the viewpoint of improving the global environment. In recent years, a method of recycling waste has been actively studied together with methods of reducing the amount of waste produced.
For example, if main constituent materials of the plurality of resin layers in the laminated film are of the same type, there is no need to separate and reuse each resin layer separately, and the entire laminated film can be easily reused, thereby increasing the usefulness.
As such a laminated film, a polyethylene laminate for a package material, which includes, for example, at least a stretched polyethylene film, an adhesive layer containing a solvent-free adhesive, and a heat-sealable polyethylene layer is disclosed (see PTL 1).

Citation List

Patent Literature

[PTL 1] Japanese Unexamined Patent Application, First Publication No. 2019-189333

Summary of Invention

Technical Problem

In most cases, a problem that a resin film easily adheres to a heating plate in a heat-sealing device is generated in a case in which the resin film is heat-sealed. This is because the heat resistance of the resin film is insufficient. Meanwhile, it is uncertain whether the laminated film described in PTL 1 has sufficient heat resistance.
The present invention has been made in view of the above circumstance, and an objective of the present invention is to provide a laminated film having higher heat resistance and higher reusability than the film in the related art.

Solution to Problem

In order to solve the above problem, the present invention employs the following configurations.

[1] A laminated film including a first resin layer, and a second resin layer, in which the first resin layer and the second resin layer each contain polyolefin-based resins of the same kind, and in a case in which a dynamic mechanical analysis is performed on the second resin layer to measure an elastic modulus $E'(100)$ at 100°C and an elastic modulus $E'(110)$ at 110°C at a vibration frequency of 1 Hz, a value of $E'(110)/E'(100)$ is equal to or more than 0.2.
[2] The laminated film according to [1], in which the laminated film has a gel fraction of equal to or more than 30%.
[3] The laminated film according to [1] or [2], in which the laminated film is irradiated with an electron beam under a condition of an absorption dose of 20 to 300 kGy.
[4] The laminated film according to any one of [1] to [3], wherein in a case in which a thermomechanical analysis is performed on the laminated film, a temperature indicating a displacement of 2000 $\mu$m is equal to or higher than 120°C.
[5] The laminated film according to any one of [1] to [4], further including a third resin layer between the first resin layer and the second resin layer, in which the first resin layer, the second resin layer, and the third resin layer each contain polyolefin-based resins of the same kind.

[6] The laminated film according to [5], in which the third resin layer is composed of a plurality of layers including three or more layers, at least one of the layers containing the polyolefin-based resin, an ethylene-vinyl alcohol copolymer, and an ethylene-vinyl alcohol-vinyl acetate copolymer, and the polyolefin-based resin does not correspond to any of an ethylene-vinyl alcohol copolymer, an ethylene-vinyl acetate copolymer, and an ethylene-vinyl alcohol-vinyl acetate copolymer.

[7] The laminated film according to any one of [1] to [6], in which the polyolefin-based resin is a polyethylene-based resin.

[8] The laminated film according to any one of [1] to [7], wherein in a case in which a tip portion of a needle having 0.5 mm of a curvature radius of the tip portion is perpendicularly put into the laminated film at a speed of 500 mm/min, a load applied to the needle at a moment when the needle penetrates the laminated film is equal to or more than 7 N.

[9] The laminated film according to [1], in which the value of E'(110)/E'(100) is equal to or more than 0.5.

[10] The laminated film according to [1] or [9], in which the second resin layer contains high density polyethylene.

Advantageous Effects of Invention

According to the present invention, the laminated film having higher heat resistance and higher reusability than the film in the related art is provided.

Brief Description of Drawings

FIG. 1 is a cross-sectional view schematically showing an example of a laminated film according to an embodiment of the present invention.

FIG. 2 is a cross-sectional view schematically showing another example of the laminated film according to the embodiment of the present invention.

FIG. 3 is a cross-sectional view schematically showing an example of a package provided with the laminated film according to the embodiment of the present invention.

Description of Embodiments

<<Laminated Film>>

A laminated film includes a first resin layer and a second resin layer. The first resin layer and the second resin layer each contain polyolefin-based resins of the same kind. In a case in which a dynamic mechanical analysis (DMA) is performed on the second resin layer to measure an elastic modulus E'(100) at 100°C and an elastic modulus E'(110) at 110°C at a vibration frequency of 1 Hz, a value of E'(110)/E'(100) (may be referred to as an E'(1 10)/E'(100) value in the present specification) is equal to or more than 0.2.

As used herein, the term "elastic modulus" means a "storage elastic modulus" unless otherwise specified.

The laminated film of the present embodiment has high reusability because the first resin layer and the second resin layer each contain polyolefin-based resins of the same kind.

The laminated film of the present embodiment includes the second resin layer, of which an E'(1 10)/E'(100) value is equal to or more than 0.2, and this configuration enables the heat resistance of the second resin layer to be high, and as a result, the laminated film of the present embodiment has higher heat resistance than a laminated film that contains a conventional polyolefin-based resin. As described above, in a case in which such a laminated film having high heat resistance is heat-sealed, adhesion between a heating plate in a heat-sealing device and the laminated film (particularly, the second resin layer) is suppressed.

<First Resin Layer>

The first resin layer contains a polyolefin-based resin.

The polyolefin-based resin contained in the first resin layer is not particularly limited as long as it has a constituent unit derived from an olefin, and the polyolefin-based resin may be a homopolymer composed of one olefin or may be a copolymer composed of two or more olefins.

Examples of the homopolymer composed of the olefin include polyethylene such as low density polyethylene (LDPE), linear low density polyethylene (LLDPE), metallocene-catalyzed linear low density polyethylene (mLLDPE), medium density polyethylene (MDPE), and high density polyethylene (HDPE); polypropylene (homopolypropylene), and other polymers.

Linear low density polyethylene (LLDPE) and metallocene-catalyzed linear low density polyethylene (mLLDPE) are a kind of low density polyethylene (LDPE).

The classification of polyethylene by its density was defined in, for example, the former JIS K 6748:1995. In the present specification, polyethylene is classified by its density based on this definition.

That is, in the present specification, low density polyethylene (LDPE) means polyethylene having a density of equal to or more than 0.91 $g/cm^3$ and less than 0.93 $g/cm^3$.

In addition, medium density polyethylene (MDPE) means polyethylene having a density of equal to or more than 0.93 $g/cm^3$ and less than 0.942 $g/cm^3$.

Furthermore, high density polyethylene (HDPE) means polyethylene having a density of equal to or more than 0.942 $g/cm^3$.

Examples of the olefin copolymer include an ethylene-based copolymer that has at least a constituent unit derived from ethylene and a propylene-based copolymer that has at least a constituent unit derived from propylene.

The ethylene-based copolymer has a constituent unit derived from ethylene and a constituent unit derived from a monomer other than ethylene. However, among the olefin copolymers that have a constituent unit derived from ethylene and a constituent unit derived from propylene, a copolymer that has the larger number of constituent units derived from propylene than the number of constituent units derived from ethylene is classified as a propylene-based copolymer for convenience.

Examples of the ethylene-based copolymer include an ethylene-vinyl acetate copolymer (EVA), an ethylene-vinyl alcohol copolymer (EVOH), an ethylene-vinyl alcohol-vinyl acetate copolymer (also known as a partially saponified product of the ethylene-vinyl acetate copolymer, sometimes referred to as "EVA partially saponified product" in the present specification), ethylene-methyl acrylate copolymer (EMA), ethylene-methyl methacrylate copolymer (EMMA), ethylene-ethyl acrylate copolymer (EEA), ethylene-acrylic acid copolymer (EAA), ethylene-methacrylic acid copolymer (EMAA), ethylene-ethyl acrylate-maleic anhydride copolymer (E-EA-MAH), ionomer (ION), and other polymers.

An example of the ionomer includes a resin having a structure formed by changing a copolymer of ethylene and a small amount of acrylic acid or methacrylic acid into an ion bridge structure resulting from salt formation of the acid part thereof and the metallic ion.

The propylene-based copolymer has a constituent unit derived from propylene and a constituent unit derived from a monomer other than propylene.

Examples of the propylene-based copolymer include a propylene-ethylene random copolymer (also known as polypropylene random copolymer (rPP)) and a propylene-ethylene block copolymer (also known as polypropylene block copolymer (bPP)).

The polyolefin-based resin contained in the first resin layer may be only one kind or may be two or more kinds. In a case in which two or more kinds are used, the combination and ratio of these can be optionally selected according to the purpose.

The polyolefin-based resin contained in the first resin layer is preferably a polyethylene-based resin, and more preferably low density polyethylene.

The first resin layer may contain other components in addition to the polyolefin-based resin as long as the effects of the present invention are not impaired.

The other components may be any of a resin component (may be referred to as "another resin component" in the present specification) and a non-resin component (may be referred to as "another non-resin component" in the present specification).

The other resin component is not particularly limited as long as it is a resin other than the polyolefin-based resin.

Examples of the other non-resin component include additives known in the art.

Examples of the additives include anti-fogging agents, anti-blocking agents, antioxidants, antistatic agents, crystal nucleating agents, inorganic particles, viscosity-reducing agents, thickeners, heat stabilizers, lubricants, infrared absorbers, and ultraviolet absorbers.

The other component contained in the first resin layer may be only one kind or may be two or more kinds. In a case in which two or more kinds are used, the combination and ratio of these can be optionally selected according to the purpose.

In the first resin layer, a ratio of a content of the polyolefin-based resin to a total mass of the first resin layer (a total content of the polyolefin-based resin of the same kind as the polyolefin-based resin contained in the second resin layer, and the polyolefin-based resin of a different kind from the polyolefin-based resin contained in the second resin layer) is preferably 90% to 100% by mass and more preferably 95% to 100% by mass, and for example, the ratio may be any of 97% to 100% by mass, and 99% to 100% by mass. By setting the ratio to be equal to or more than the above-mentioned lower limit value, a more remarkable effect of the first resin layer containing the polyolefin-based resin is obtained.

The ratio is usually equivalent to a ratio (mass parts) of a content of the polyolefin-based resin (a total content of the polyolefin-based resin of the same kind as the polyolefin-based resin contained in the second resin layer, and the polyolefin-based resin of a different kind from the polyolefin-based resin contained in the second resin layer) to a total content (mass parts) of a component that does not vaporize at room temperature in the first resin composition, described later.

The first resin layer and the second resin layer each contain polyolefin-based resins of the same kind.

In the present embodiment, the term "resins of the same kind" is not only applied to the case of polyolefin-based resins, but also applied to the case in which in comparison of resins that have common constituent units with each other, a ratio of the amount (mol) of the common constituent units to a total amount (mol) of the constituent units is equal to or more than 20% by mol in both resins. For example, low density polyethylene (LDPE), linear low density polyethylene (LLDPE), metallocene-catalyzed linear low density polyethylene (mLLDPE), medium density polyethylene (MDPE), and high density polyethylene (HDPE), an ethylene-methyl acrylate copolymer (EMA resin), an ethylene-methyl methacrylate copolymer (EMMA resin), an ethylene-vinyl alcohol copolymer (EVOH), an ethylene-vinyl acetate copolymer (EVA), an ethylene-vinyl alcohol-vinyl acetate copolymer (EVA partially saponified product), and other polymers are of the same kind because all of the above have a ratio of the amount (mol) of constituent units derived from ethylene to the total amount (mol) of the constituent units of equal to or more than 20% by mol. By contrast, for example, among the propylene-ethylene random copolymer, the propylene-ethylene block copolymer, and other polymers, a copolymer that has the ratio of the amount (mol) of the constituent units derived from ethylene to the total amount (mol) of the constituent units of less than 20% by mol is of a different kind from the low density polyethylene.

In the present embodiment, each of the resins of the same kind preferably has a ratio of the amount (mol) of the common constituent units to the total amount (mol) of the constituent units of equal to or more than 30% by mol even in both resins, more preferably have a ratio of equal to or more than 40% by mol, and still more preferably have a ratio of equal to or more than 50% by mol, and for example, the ratio may be any of equal to or more than 60% by mol, equal to or more than 70% by mol, and equal to or more than 80% by mol.

In the first resin layer, a ratio of a content of the polyolefin-based resin of the same kind as the polyolefin-based resin contained in the second resin layer to the total mass of the first resin layer is preferably 80% to 100% by mass and more preferably 90% to 100% by mass, and may be, for example, both 95% to 100% by mass and 99% to 100% by mass. By setting the ratio to be equal to or more than the above-mentioned lower limit value, the reusability of the laminated film is higher.

In a case in which the first resin layer contains low density polyethylene, a ratio of a content of the low density polyethylene to the total mass of the first resin layer in the first resin layer is preferably 70% to 100% by mass, more preferably 80% to 100% by mass, and still more preferably 90% to 100% by mass. By setting the ratio to be equal to or more than the above-mentioned lower limit value, the effect of the first resin layer containing the low density polyethylene is further improved.

In the present specification, the term "room temperature" means a temperature that is not particularly cooled or heated, that is, a normal temperature, and examples thereof include a temperature of 15°C to 25°C.

The first resin layer may be composed of one layer (single layer) or may be composed of two or more layers. In a case in which the first resin layer is composed of a plurality of layers, the plurality of layers may be the same or different from each other, and a combination of the plurality of layers is not particularly limited as long as the effects of the present invention are not impaired.

In the present specification, it is not limited to the case of the first resin layer, the term "plurality of layers may be the same or different from each other" means that "all of the layers may be the same, all of the layers may be different from each other, or only some of the layers may be the same", and furthermore, the term "plurality of layers are different from each other" means that "at least one of a constituent material or a thickness of each layer is different from each other".

A thickness of the first resin layer can be optionally set according to the use of the laminated film, and is not particularly limited.

The thickness of the first resin layer is usually preferably 5 to 100 $\mu$m, more preferably 10 to 80 $\mu$m, and still more preferably 20 to 60 $\mu$m. The configuration in which the thickness of the first resin layer is equal to or more than at least the above-mentioned lower limit value enables the strength of the first resin layer to be further improved, and enables a more remarkable effect of the laminated film including the first resin layer to be obtained. The configuration in which the thickness of the first resin layer is equal to or less than the upper limit value enables the first resin layer to be prevented from having an excessive thickness.

In a case in which the first resin layer is composed of the plurality of layers, the total thickness of the plurality of layers may be set to be the preferred thickness of the first resin layer.

The first resin layer is preferably a non-stretched layer (film). Since the first resin layer is a non-stretched layer, the formability of the laminated film is improved.

The first resin layer is suitable as, for example, a sealant layer.

<Second Resin Layer>

The second resin layer contains a polyolefin-based resin of the same kind as the polyolefin-based resin contained in the first resin layer.

The polyolefin-based resin of the same kind, which is contained in the second resin layer, may be only one kind or may be two or more kinds. In a case in which two or more kinds are used, the combination and ratio of these can be optionally selected according to the purpose.

The polyolefin-based resin of the same kind, which is contained in the second resin layer, is preferably a polyethylene-based resin, and more preferably high density polyethylene. It is easier for the second resin layer containing a polyethylene-based resin, particularly high density polyethylene, to have an E'(1 10)/E'(100) value of equal to or more than 0.2.

That is, it is preferable that both the first resin layer and the second resin layer each contain polyethylene-based resins, and it is more preferable that the second resin layer contains high density polyethylene.

The second resin layer may contain other components in addition to the polyolefin-based resin of the same kind as the polyolefin-based resin contained in the first resin layer, as long as the effects of the present invention are not impaired.

The other components contained in the second resin layer may be any of a resin component (may be referred to as "another resin component" in the present specification) and a non-resin component (may be referred to as "another non-resin component" in the present specification).

The other resin component in the second resin layer is not particularly limited as long as it is a resin other than the polyolefin-based resin of the same kind as the polyolefin-based resin contained in the first resin layer.

Examples of the other resin component in the second resin layer include a polyolefin-based resin of a different kind from the polyolefin-based resin contained in the first resin layer, and a resin other than the polyolefin-based resin.

Examples of the polyolefin-based resin of a different kind from the polyolefin-based resin contained in the first resin layer include polyolefin-based resins of the same kind as those mentioned above as the polyolefin-based resin contained in the first resin layer.

Examples of the non-resin component in the second resin layer include the non-resin component of the same kind as those in the first resin layer.

The other component contained in the second resin layer may be only one kind or may be two or more kinds. In a case in which two or more kinds are used, the combination and ratio of these can be optionally selected according to the purpose.

In the second resin layer, a ratio of a content of the polyolefin-based resin to a total mass of the second resin layer (a total content of the polyolefin-based resin of the same kind as the polyolefin-based resin contained in the first resin layer, and the polyolefin-based resin of a different kind from the polyolefin-based resin contained in the first resin layer) is preferably 90% to 100% by mass and more preferably 95% to 100% by mass, and for example, the ratio may be any of 97% to 100% by mass, and 99% to 100% by mass. By setting the ratio to be equal to or more than the above-mentioned lower limit value, a more remarkable effect of the second resin layer containing the polyolefin-based resin is obtained.

The ratio is usually equivalent to a ratio (mass parts) of a content of the polyolefin-based resin (a total content of the polyolefin-based resin of the same kind as the polyolefin-based resin contained in the first resin layer, and the polyolefin-based resin of a different kind from the polyolefin-based resin contained in the first resin layer) to a total content (mass parts) of a component that does not vaporize at room temperature in the second resin composition, described later.

In the second resin layer, a ratio of a content of the polyolefin-based resin of the same kind as the polyolefin-based resin contained in the first resin layer to the total mass of the second resin layer is preferably 80% to 100% by mass and more preferably 90% to 100% by mass, and may be, for example, both 95% to 100% by mass and 99% to 100% by mass. By setting the ratio to be equal to or more than the above-mentioned lower limit value, the reusability of the laminated film is higher.

In a case in which the second resin layer contains high density polyethylene, a ratio of a content of the high density polyethylene to the total mass of the second resin layer in the second resin layer is preferably 70% to 100% by mass, more preferably 80% to 100% by mass, and still more preferably 90% to 100% by mass. The ratio of equal to or more than the above-mentioned lower limit value enables the heat resistance of the second resin layer to be remarkably improved.

The second resin layer may be irradiated with an electron beam. That is, the laminated film may be irradiated with an electron beam, and a second resin layer side of the laminated film is preferably irradiated with an electron beam. For example, even though the second resin layer does not contain high density polyethylene, the second resin layer can easily have an E'(1 10)/E'(100) value of equal to or more than 0.2 by the irradiation with an electron beam. The reason thereof is presumed that the crosslink density of a resin in the second resin layer is increased by the irradiation with an electron beam.

Examples of the preferred second resin layer that has been irradiated with an electron beam include a second resin layer that contains low density polyethylene and that is obtained by irradiating, with an electron beam, a second resin layer that has been irradiated with no electron beam (in the present specification, the second resin layer in this case is referred to as a "second non-irradiated resin layer" to distinguish from the second resin layer that has been irradiated with an electron beam).

That is, examples of the preferred laminated film that has been irradiated with an electron beam include a laminated film (in the present specification, the laminated film in this case may be referred to as a "non-irradiated laminated film" to distinguish from the laminated film that has been irradiated with an electron beam) that includes the second non-irradiated resin layer containing low density polyethylene and that has been irradiated with an electron beam.

In the second non-irradiated resin layer, a ratio of a content of the low density polyethylene to the total mass of the second non-irradiated resin layer is preferably 70% to 100% by mass, more preferably 80% to 100% by mass, and still more preferably 90% to 100% by mass. By setting the ratio to be equal to or more than the above-mentioned lower limit value, a more remarkable effect of the irradiation with an electron beam is obtained.

Irradiating the second non-irradiated resin layer or the non-irradiated laminated film with an electron beam is preferably carried out under the condition of an absorption dose of 20 to 300 kGy. By setting the absorption dose to be equal to or more than the above-mentioned lower limit value, a more remarkable effect of the irradiation with an electron beam is obtained. By setting the absorption dose to be equal to or less than the above-mentioned upper limit value, excessive crosslinking of the resin in the second resin layer is suppressed.

That is, an example of the preferred laminated film, which is irradiated with an electron beam, includes a laminated film that is irradiated with an electron beam under a condition of an absorption dose of 20 to 300 kGy.

An acceleration voltage of the electron beam during the irradiation of the second non-irradiated resin layer or the non-irradiated laminated film is preferably 100 to 300 kV, more preferably 120 to 280 kV, and still more preferably 140 to 260 kV. By setting the acceleration voltage to be equal to or more than the above-mentioned lower limit value, a more remarkable effect of the irradiation with an electron beam is obtained. By setting the acceleration voltage to be equal to or less than the above-mentioned upper limit value, excessive crosslinking of the resin in the second resin layer is suppressed.

For example, a gel fraction of the laminated film is increased by the irradiation with an electron beam. That is, the gel fraction of the laminated film is larger than a gel fraction of the non-irradiated laminated film.

The gel fraction of the laminated film is preferably equal to or more than 30%, and may be, for example, any of 30% to 90%, 32% to 78%, and 34% to 76%. Such a laminated film has more preferable heat resistance as the laminated film provided with the second resin layer having the above-mentioned E'(110)/E'(100) value.

The gel fraction of the laminated film can be measured in accordance with JIS K 6769. That is, the laminated film is immersed in an organic solvent such as xylene, and an insoluble matter remaining in an undissolved state is dried to obtain a mass thereof. Thereafter, a gel fraction can be calculated from a mass of the laminated film before dissolution and a mass of the insoluble matter derived from the laminated film after drying. More specifically, for example, a laminated film of X g is wrapped with a stainless steel wire mesh of Y g, the wrapped film is immersed in a heated organic solvent, and the insoluble matter derived from the laminated film is taken out from the organic solvent together with the stainless steel wire mesh. Next, the stainless steel wire mesh wrapping the insoluble matter is vacuum-dried, and a total mass (Z g) of the dried insoluble matter and the stainless steel wire mesh is measured. The gel fraction of the laminated film is calculated from the following Equation (1).

$$\text{Gel fraction (\% by mass) of laminated film} = (Z - Y)/X \times 100 \ \dots \ (1)$$

The properties of the laminated film are changed during thermomechanical analysis by the irradiation of an electron beam, for example.

For example, in a case in which a thermomechanical analysis is performed on the laminated film, a temperature at which a displacement is 2000 $\mu$m (in the present specification, may be abbreviated as a "displacement temperature of 2000 $\mu$m") is preferably equal to or higher than 120°C, and for example, may be any of 125°C to 200°C and 130°C to 195°C. Such a laminated film has more preferable heat resistance as the laminated film provided with the second resin layer having the above-mentioned E'(110)/E'(100) value.

For example, in a case in which a thermomechanical analysis is performed on the laminated film, a displacement at a temperature of 100°C is preferably equal to or less than 500 $\mu$m, and for example, may be any of 50 to 490 $\mu$m, and 100 $\mu$m to equal to or more than 480 $\mu$m. Such a laminated film has more preferable heat resistance as the laminated film provided with the second resin layer having the above-mentioned E'(110)/E'(100) value.

The thermomechanical analysis of the laminated film is in accordance with, for example, JIS K 7196, and thermomechanical analysis can be carried out by a method of measuring the thermal expansion amount of a sample from a difference between the thermal expansion amounts in a case in which a temperature of a standard sample and a temperature of a target sample are raised at a constant rate.

The second resin layer may be composed of one layer (single layer) or may be composed of two or more layers. In a case in which the second resin layer is composed of a plurality of layers, the plurality of layers may be the same or different from each other, and a combination of the plurality of layers is not particularly limited as long as the effects of the present invention are not impaired.

A thickness of the second resin layer can be optionally set according to the use of the laminated film, and is not particularly limited.

The thickness of the second resin layer is usually preferably 5 to 100 $\mu$m, more preferably 10 to 80 $\mu$m, and still more preferably 20 to 60 $\mu$m. The configuration in which the thickness of the second resin layer is equal to or more than at least the above-mentioned lower limit value enables the strength of the second resin layer to be further improved, and enables a more remarkable effect of the laminated film including the second resin layer to be obtained. The configuration in which the thickness of the second resin layer is equal to or less than the upper limit value enables the second resin layer to be prevented from having an excessive thickness.

In a case in which the second resin layer is composed of the plurality of layers, the total thickness of the plurality of layers may be set to be the preferred thickness of the second resin layer.

In the laminated film, a ratio (thickness ratio) of [the thickness of the first resin layer]/[the thickness of the second resin layer] is not particularly limited, but is preferably 0.7 to 1.3, regardless of the presence or absence of a third resin layer described later. By setting the thickness ratio to be within such a range, the effect obtained by providing the laminated film with the first resin layer and the effect obtained by providing the second resin layer are more well balanced.

In a case in which a dynamic mechanical analysis (DMA) is performed on the second resin layer to measure an elastic modulus E'(100) at 100°C at a vibration frequency of 1 Hz and an elastic modulus E'(110) at 110°C at a vibration frequency of 1 Hz, an E'(1 10)/E'(100) value is equal to or more than 0.2.

At this time, examples of the second resin layer subjected to a dynamic mechanical analysis, that is, a test piece of the second resin layer, include a test piece having a width of 1 cm and a length of equal to or more than5 cm. With this configuration in which such a test piece is used, it is preferable that the test piece is placed to set a length of a measurement target portion subjected to a dynamic mechanical analysis as 2 cm, and the test piece is heated at a temperature rising rate of 5°C/min to perform the dynamic mechanical analysis. Under such conditions, the elastic modulus E'(100) and the elastic modulus E'(110) can be measured with higher accuracy.

In terms of increasing the heat resistance of the second resin layer and the laminated film, the E'(1 10)/E'(100) value of the second resin layer is preferably equal to or more than 0.24, and for example, may be any of equal to or more than 0.3, equal to or more than 0.4, equal to or more than 0.5, and equal to or more than 0.6.

The upper limit value of the E'(1 10)/E'(100) value of the second resin layer is not particularly limited. For example, the second resin layer having an E'(110)/E'(100) value of equal to or less than 0.9 can be more easily achieved.

The E'(110)/E'(100) value of the second resin layer can be appropriately adjusted within a range set by optionally combining any of the above-mentioned lower limit value and upper limit value. For example, in one embodiment, the E'(110)/E'(100) value of the second resin layer is preferably 0.2 to 0.9 and more preferably 0.24 to 0.9, and for example, may be any of 0.3 to 0.9, 0.4 to 0.9, 0.5 to 0.9, and 0.6 to 0.9.

The E'(110)/E'(100) value of the second resin layer containing high density polyethylene tends to be increased.

For example, the second resin layer having a value of E'(110)/E'(100) of equal to or more than 0.5 can be more easily achieved by the second resin layer containing high density polyethylene.

The E'(100) of the second resin layer is not particularly limited as long as the above-mentioned conditions of the E'(110)/E'(100) value are satisfied. For example, the E'(100) of the second resin layer may be $1.6 \times 10^7$ to $2 \times 10^8$ Pa.

The E'(110) of the second resin layer is not particularly limited as long as the above-mentioned conditions of the E'(110)/E'(100) value are satisfied. For example, the E'(110) of the second resin layer may be $1.5 \times 10^7$ to $2.2 \times 10^8$ Pa.

The second resin layer is preferably a non-stretched layer (film). Since the second resin layer is a non-stretched layer, the formability of the laminated film is improved.

Since the second resin layer has heat resistance, the second resin layer is suitably used as, for example, an outer layer (the outermost layer on the opposite side to a sealant layer side).

<Third resin Layer>

The laminated film further may include a third resin layer between the first resin layer and the second resin layer, in addition to the first resin layer and the second resin layer.

The third resin layer contains a polyolefin-based resin of the same kind as the polyolefin-based resins contained in the first resin layer and the second resin layer. That is, in the laminated film provided with the third resin layer, the first resin layer, the second resin layer, and the third resin layer contain polyolefin-based resins of the same kind.

In the present embodiment, the term "resins of the same kind" is not only applied to the case of polyolefin-based resins, but also applied to the case in which, in comparison of resins that have common constituent units with each other, a ratio of the amount (mol) of the common constituent units to a total amount (mol) of the constituent units is equal to or more than 20% by mol in both resins. For example, low density polyethylene (LDPE), linear low density polyethylene (LLDPE), metallocene-catalyzed linear low density polyethylene (mLLDPE), medium density polyethylene (MDPE), and high density polyethylene (HDPE), an ethylene-methyl acrylate copolymer (EMA resin), an ethylene-methyl methacrylate copolymer (EMMA resin), an ethylene-vinyl alcohol copolymer (EVOH), an ethylene-vinyl acetate copolymer (EVA), an ethylene-vinyl alcohol-vinyl acetate copolymer (EVA partially saponified product), and other polymers are of the same kind because all of the above have a ratio of the amount (mol) of constituent units derived from ethylene to the total amount (mol) of the constituent units of equal to or more than 20% by mol. By contrast, for example, among the propylene-ethylene random copolymer, the propylene-ethylene block copolymer, and other polymers, a copolymer that has the ratio of the amount (mol) of the constituent units derived from ethylene to the total amount (mol) of the constituent units of less than 20% by mol is of a different kind from the low density polyethylene.

In the present embodiment, each of the resins of the same kind preferably has a ratio of the amount (mol) of the common constituent units to the total amount (mol) of the constituent units of equal to or more than 30% by mol even in both resins, more preferably have a ratio of equal to or more than 40% by mol, and still more preferably have a ratio of equal to or more than 50% by mol, and for example, the ratio may be any of equal to or more than 60% by mol, equal to or more than 70% by mol, and equal to or more than 80% by mol.

The laminated film provided with the third resin layer has an effect obtained by provision of the third resin layer, and has high reusability.

The polyolefin-based resin of the same kind, which is contained in the third resin layer, may be only one kind or may be two or more kinds. In a case in which two or more kinds are used, the combination and ratio of these can be optionally selected according to the purpose.

The polyolefin-based resin of the same kind, which is contained in the third resin layer, is preferably a polyethylene-based resin.

That is, it is preferable that all the first resin layer, the second resin layer, and the third resin layer contain a polyethylene-based resin.

The third resin layer may contain other components in addition to the polyolefin-based resin of the same kind as the polyolefin-based resins contained in the first resin layer and the second resin layer, as long as the effects of the present invention are not impaired.

The other components contained in the third resin layer may be any of a resin component (may be referred to as "another resin component" in the present specification) and a non-resin component (may be referred to as "another non-resin component" in the present specification).

The other resin component in the third resin layer is not particularly limited as long as it is a resin other than the polyolefin-based resin of the same kind as the polyolefin-based resins contained in the first resin layer and the second resin layer.

Examples of the other resin component in the third resin layer include a polyolefin-based resin of a different kind from the polyolefin-based resins contained in the first resin layer and the second resin layer, and a resin other than the polyolefin-based resin.

Examples of the polyolefin-based resin (included in the third resin layer) used for the third resin layer also include an elastomer component such as an $\alpha$-olefin copolymer; an ethylene-vinyl alcohol copolymer (EVOH); an ethylene-vinyl alcohol-vinyl acetate copolymer (EVA partially saponified product). The laminated film provided with a third resin layer that contains an elastomer has high pinhole resistance and high strength even though the laminated film does not contain a polyamide such as nylon. The laminated film provided with the third resin layer that contains EVOH has an oxygen barrier property.

Examples of the polyolefin-based resin of a different kind from the polyolefin-based resins contained in the first resin layer and the second resin layer include polyolefin-based resins of the same kind as those mentioned above as the polyolefin-based resin contained in the first resin layer; an elastomer such as an $\alpha$-olefin copolymer.

The laminated film provided with the third resin layer that contains the elastomer has high pinhole resistance and high strength even though the laminated film does not contain a polyamide such as nylon.

Examples of a resin other than the polyolefin-based resin in the third resin layer include elastomers such as styrene-ethylene-butylene-ethylene block copolymer.

The laminated film provided with the third resin layer that contains the elastomer has high pinhole resistance and high strength even though the laminated film does not contain a polyamide such as nylon.

Examples of the non-resin component in the third resin layer include the non-resin component of the same kind as those in the first resin layer.

The other component contained in the third resin layer may be only one kind or may be two or more kinds. In a case in which two or more kinds are used, the combination and ratio of these can be optionally selected according to the purpose.

In the third resin layer, a ratio of a content of the polyolefin-based resin to a total mass of the third resin layer (a total content of the polyolefin-based resin of the same kind as the polyolefin-based resins contained in the first resin layer and the second resin layer, and the polyolefin-based resin of a different kind from the polyolefin-based resins contained in the first resin layer and the second resin layer) is preferably 90% to 100% by mass and more preferably 95% to 100% by mass, and for example, the ratio may be any of 97% to 100% by mass, and 99% to 100% by mass. By setting the ratio to be equal to or more than the above-mentioned lower limit value, a more remarkable effect of the third resin layer containing the polyolefin-based resin is obtained.

The ratio is usually equivalent to a ratio (mass parts) of a content of the polyolefin-based resin (a total content of the polyolefin-based resin of the same kind as the polyolefin-based resins contained in the first resin layer and the second resin layer, and the polyolefin-based resin of a different kind from the polyolefin-based resins contained in the first resin layer and the second resin layer) to a total content (mass parts) of a component that does not vaporize at room temperature in the third resin composition, described later.

In the third resin layer, a ratio of a content of the polyolefin-based resin of the same kind as the polyolefin-based resins contained in the first resin layer and the second resin layer to the total mass of the third resin layer is preferably 80% to 100% by mass and more preferably 90% to 100% by mass, and may be, for example, both 95% to 100% by mass and 99% to 100% by mass. By setting the ratio to be equal to or more than the above-mentioned lower limit value, the reusability of the laminated film is higher.

The third resin layer may be composed of one layer (single layer) or may be composed of two or more layers. In a case in which the third resin layer is composed of a plurality of layers, the plurality of layers may be the same or different from each other, and a combination of the plurality of layers is not particularly limited as long as the effects of the present invention are not impaired.

In the third resin layer that is composed of a plurality of layers, all the layers contain a polyolefin-based resin of the same kind as the polyolefin-based resins contained in the first resin layer and the second resin layer.

A thickness of the third resin layer can be optionally set according to the use of the laminated film, and is not particularly limited.

The thickness of the third resin layer is usually preferably 15 to 200 $\mu$m, more preferably 30 to 160 $\mu$m, and still more preferably 50 to 120 $\mu$m. The configuration in which the thickness of the third resin layer is equal to or more than the above-mentioned lower limit value enables the strength of the third resin layer to be further improved, and enables a more remarkable effect of the laminated film including the third resin layer to be obtained. The configuration in which the thickness of the third resin layer is equal to or less than the upper limit value enables the second resin layer to be prevented from having an excessive thickness.

In a case in which the third resin layer is composed of the plurality of layers, the total thickness of the plurality of layers may be set to be the preferred thickness of the third resin layer.

In a case in which the laminated film includes the third resin layer, a ratio of the thickness of the third resin layer to the thickness of the laminated film is not particularly limited, but is preferably 50% to 70%. By setting the ratio to be equal to or more than the above-mentioned lower limit value, the effect of the laminated film, which contains the third resin layer, is further improved. By setting the ratio to be equal to or less than the above-mentioned upper limit value, the effect of the laminated film, which contains the first resin layer and the second resin layer, is further improved.

In a case in which the laminated film includes the third resin layer, a ratio of the total thickness of the first resin layer and the second resin layer to the thickness of the laminated film is not particularly limited, but is preferably 30% to 50%. By setting the ratio to be equal to or more than the above-mentioned lower limit value, the effect of the laminated film, which contains the first resin layer and the second resin layer, is further improved. By setting the ratio to be equal to or less than the above-mentioned upper limit value, the effect of the laminated film, which contains the third resin layer, is further improved.

The third resin layer is preferably a non-stretched layer (film). Since the third resin layer is a non-stretched layer, the formability of the laminated film is improved.

The third resin layer is suitable as, for example, an intermediate layer such as a pinhole resistance layer or an oxygen barrier layer.

The laminated film has high pinhole resistance and high strength even though the laminated film does not contain a polyamide such as nylon.

For example, in a case in which a tip portion of a needle that has a curvature radius of the tip portion of 0.5 mm is vertically put into the laminated film at a speed of 500 mm/min, and a load, which is added to the needle when the needle penetrates the laminated film, is denoted by a puncture strength (N), it can be said that the higher the puncture strength, the higher the pinhole resistance of the laminated film.

Examples of the needle include those made of stainless steel.

The puncture strength of the laminated film is preferably equal to or more than 7N, and for example, may be any of equal to or more than 8N and equal to or more than 10N.

The upper limit value of the puncture strength is not particularly limited, but for example, a laminated film having a puncture strength of equal to or less than 12 N can be more easily achieved.

The laminated film having the high puncture strength as described above is provided with, for example, the third resin layer, and can be more easily achieved. By adjusting the kind and content of the resins contained in the first resin layer, the second resin layer, and in some cases, the third resin layer, the puncture strength of the laminated film can be adjusted.

The resin layer containing an ethylene-vinyl alcohol copolymer (EVOH) has a high oxygen barrier property. Therefore, the laminated film provided with, for example, the third resin layer that contains an ethylene-vinyl alcohol copolymer has an oxygen barrier property.

On the other hand, the ethylene-vinyl alcohol copolymer usually has low compatibility with polyolefin-based resins that do not fall under any of an ethylene-vinyl acetate copolymer and an ethylene-vinyl alcohol-vinyl acetate copolymer (in other words, an ethylene-vinyl acetate copolymer and a partially saponified product thereof). The ethylene-vinyl alcohol-vinyl acetate copolymer (a partially saponified product of the ethylene-vinyl acetate copolymer) usually has compatibility with an ethylene-vinyl alcohol copolymer, and further has compatibility with polyolefin-based resins that do not fall under any of an ethylene-vinyl alcohol copolymer, an ethylene-vinyl acetate copolymer, and an ethylene-vinyl alcohol-vinyl acetate copolymer (in the present specification, may be referred to as a "non-vinyl polyolefin-based resin"). Therefore, in a case in which the third resin layer contains the non-vinyl polyolefin-based resin and the ethylene-vinyl alcohol copolymer, this third resin layer is preferably a resin layer that further contains an ethylene-vinyl alcohol-vinyl acetate copolymer in addition to these resins (in the present specification, may be referred to as a "resin layer (I)"). The third resin layer, which is the resin layer (I), has a high oxygen barrier property.

In the resin layer (I), the non-vinyl polyolefin-based resin is a polyolefin-based resin of the same kind as the polyolefin-based resins contained in the first resin layer and the second resin layer, and is preferably a polyethylene-based resin.

In the resin layer (I), both the ethylene-vinyl alcohol copolymer and the ethylene-vinyl alcohol-vinyl acetate copolymer are preferably polyolefin-based resins of the same kind as the polyolefin-based resins contained in the first resin layer and the second resin layer.

A ratio of the amount (mol) of constituent units derived from ethylene to the total amount (mol) of the constituent units in an ethylene-vinyl alcohol copolymer in the resin layer (I) (the third resin layer containing an ethylene-vinyl alcohol copolymer, the non-vinyl polyolefin-based resin, and an ethylene-vinyl alcohol-vinyl acetate copolymer) is preferably equal to or more than 20% by mol and more preferably 20% to 80% by mol, and for example, may be any of 20% to 70% by mol, 20% to 60% by mol, and 20% to 50% by mol, may be any of 30% to 80% by mol, 40% to 80% by mol, and 50% to 80% by mol, and may be any of 30% to 70% by mol and 40% to 60% by mol.

In the resin layer (I), a ratio of a content of the ethylene-vinyl alcohol copolymer to the total mass of the resin layer (I) may be, for example, 25% to 70% by mass. However, in terms of increasing the uniformity and the oxygen barrier property of the resin layer (I), the above-mentioned ratio is preferably 40% to 70% by mass and more preferably 50% to 70% by mass, and for example, may be 55% to 65% by mass.

The ratio is usually the same as the ratio of the content of the ethylene-vinyl alcohol copolymer to the total content (parts by mass) of a component that does not vaporize at room temperature in a resin composition (a third resin composition described later) for forming the resin layer (I).

In the resin layer (I), a ratio of a content of the non-vinyl polyolefin-based resin to the total mass of the resin layer (I) may be, for example, 5% to 50% by mass. However, in terms of increasing the uniformity and the oxygen barrier property of the resin layer (I), the above-mentioned ratio is preferably 5% to 35% by mass and more preferably 5% to 20% by mass, and for example, may be 5% to 15% by mass.

The above-mentioned ratio is usually the same as the ratio of the content (parts by mass) of the non-vinyl polyolefin-based resin to the total content (parts by mass) of a component that does not vaporize at room temperature in the resin composition (the third resin composition described later) for forming the resin layer (I).

In the resin layer (I), a ratio of a content of the ethylene-vinyl alcohol-vinyl acetate copolymer to the total mass of the resin layer (I) is preferably 20% to 40% by mass, and for example, may be 25% to 35% by mass. By setting the ratio to be within such a range, a more remarkable effect of using the ethylene-vinyl alcohol-vinyl acetate copolymer can be obtained.

The ratio is usually the same as the ratio of the content of the ethylene-vinyl alcohol-vinyl acetate copolymer to the total content (parts by mass) of a component that does not vaporize at room temperature in the resin composition (the third resin composition described later) for forming the resin layer (I).

A ratio of the total content of the ethylene-vinyl alcohol copolymer, the non-vinyl polyolefin-based resin, and the ethylene-vinyl alcohol-vinyl acetate copolymer to the total mass of the resin layer (I) is preferably 90% to 100% by mass and more preferably 95% to 100% by mass, and for example, may be any of 97% to 100% by mass and 99% to 100% by mass. By setting the ratio to be equal to or more than the lower limit value, the oxygen barrier property of the resin layer (I) is higher.

The above-mentioned ratio is usually the same as the ratio of the total content (parts by mass) of the ethylene-vinyl alcohol copolymer, the non-vinyl polyolefin-based resin, and the ethylene-vinyl alcohol-vinyl acetate copolymer to the total content (parts by mass) of the component that does not vaporize at room temperature in the resin composition (the third resin composition described later) for forming the resin layer (I).

In a case in which the laminated film includes the resin layer (I) as the third resin layer, the laminated film may include only one resin layer (I) or may include two or more layers. In a case in which the laminated film includes two or more resin layers (I), these two or more resin layers (I) may be the same or different from each other, and a combination of these resin layers (I) is not particularly limited as long as the effect of the present invention is not impaired.

An example of the laminated film including the resin layer (I) as the third resin layer includes a laminated film that includes one resin layer (I) and a third resin layer other than one or two resin layers (I) disposed on either a first resin layer side or a second resin layer side of the resin layer (I), or both the first resin layer side and the second resin layer side of the resin layer (I).

More specific examples of the laminated film include a laminated film formed of a first resin layer, one resin layer (I) (third resin layer), a third resin layer other than one or two resin layers (I), and a second resin layer, which are laminated in a thickness direction in this order, with the third resin layer being composed of a total of two or three layers; a laminated film formed of a first resin layer, a third resin layer other than one or two resin layers (I), one resin layer (I) (third resin layer), and a second resin layer, which are laminated in a thickness direction in this order, with the third resin layer being composed of a total of two or three layers; a laminated film formed of a first resin layer, a third resin layer other than one or two resin layers (I), one resin layer (I) (third resin layer), a third resin layer other than one or two resin layers (I), and a second resin layer, which are laminated in a thickness direction in this order, with the third resin layer being composed of a total of three to five layers.

In the laminated film described herein, the first resin layer, the resin layer (I), the third resin layer other than the resin layer (I), and the second resin layer all contain polyolefin-based resins of the same kind.

In the laminated film described herein, both the first resin layer and the second resin layer may be composed of only one layer or may be composed of two or more layers.

A preferred example of the laminated film includes a laminated film that is formed of a third resin layer composed of a plurality of layers including three or more layers, in which at least one of the layers contains the non-vinyl polyolefin-based resin, the ethylene-vinyl alcohol copolymer, and the ethylene-vinyl alcohol-vinyl acetate copolymer (that is, the resin layer (I)), in terms of the oxygen barrier property being provided.

In the third resin layer that is the resin layer (I), one or two or more selected from the group consisting of the non-vinyl polyolefin-based resin, the ethylene-vinyl alcohol copolymer, and the ethylene-vinyl alcohol-vinyl acetate copolymer may be polyolefin-based resins of the same kind as the polyolefin-based resin contained in the first resin layer and the second resin layer.

For example, in a case in which the non-vinyl polyolefin-based resin is a polyolefin-based resin of the same kind as described above, either the ethylene-vinyl alcohol copolymer or the ethylene-vinyl alcohol-vinyl acetate copolymer, or both the ethylene-vinyl alcohol copolymer and the ethylene-vinyl alcohol-vinyl acetate copolymer may be polyolefin-based resins of the same kind, and both the ethylene-vinyl alcohol copolymer and the ethylene-vinyl alcohol-vinyl acetate copolymer may not be polyolefin-based resins of the same kind.

In the laminated film including the resin layer (I) as the third resin layer, a ratio of a thickness of the resin layer (I) to a thickness of the laminated film is not particularly limited, but is preferably 4% to 15%. The resin layer (I) having the ratio of equal to or more than the lower limit value has higher uniformity in thickness. By setting the ratio to be equal to or less than the above-mentioned upper limit value, the reusability of the laminated film is higher.

In a case in which the laminated film includes the resin layer (I) as a third resin layer, the oxygen permeation amount of the laminated film, which is measured in accordance with JIS K 7126-2:2006 under conditions of a temperature of 23°C and a relative humidity (RH) of 50%, may be equal to or less than 500 ml/(m$^2$·24h·atm), and is preferably equal to or less than 100 ml/(m$^2$·24h·atm), more preferably equal to or less than 50 ml/(m$^2$·24h·atm), and still more preferably equal to or less than 25 ml/(m$^2$·24h·atm), and for example, may be equal to or less than 10 ml/(m$^2$·24h·atm). In contrast, the oxygen permeation amount of the laminated film is equal to or more than 0 ml/(m$^2$·24h·atm).

In a case in which the laminated film includes the resin layer (I) as the third resin layer, the haze on the second resin layer side of the laminated film, which is externally measured, may be either equal to or less than 35% or equal to or less than 30% or, and is preferably equal to or less than 20%. The oxygen barrier property of the laminated film with the haze of equal to or less than the upper limit value is higher. This is because of the high uniformity of the resin layer (I) and the high oxygen barrier property of the resin layer (I).

The term "haze" in the present specification means the haze measured in accordance with JIS K 7136:2000.

The laminated film not only has the high reusability, but also is formed of individual layers adhered to one another without an adhesive layer because the individual layers (the first resin layer and the second resin layer, and in some cases, the third resin layer) constituting the laminated film contain the polyolefin-based resins of the same kind. That is, even though the laminated film does not have an adhesive layer, the adhesion of each layer is high. In addition, the laminated film without the adhesive layer can be produced at low cost.

In the laminated film, a ratio of a content of polyolefin-based resins of the same kind to the total mass of the laminated film is preferably equal to or more than 90%, more preferably equal to or more than 92%, and still more preferably equal to or more than 95%. By setting the ratio to be equal to or more than the lower limit value, the laminated film can be made of a monomaterial, and the entire laminated film can be easily reused.

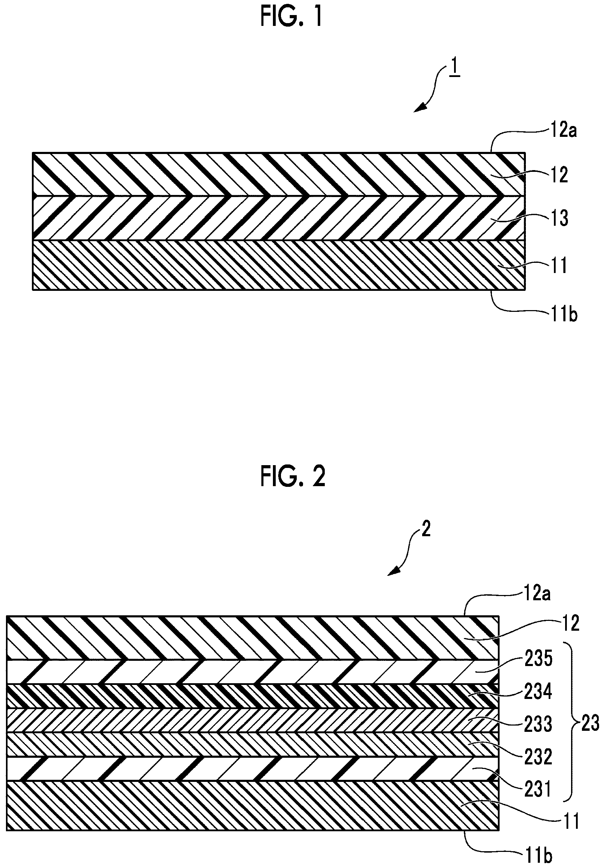

FIG. 1 is a cross-sectional view schematically illustrating an example of the laminated film of the present embodiment.

A laminated film 1 illustrated herein is configured to include a first resin layer 11 and a second resin layer 12, and further includes a third resin layer 13 between the first resin layer 11 and the second resin layer 12. That is, the laminated film 1 is formed of the first resin layer 11, the third resin layer 13, and the second resin layer 12 being laminated in a thickness direction, in this order.

The first resin layer 11, the second resin layer 12, and the third resin layer 13 all have been described above.

The third resin layer 13 may have any configuration, and the laminated film 1 may not include the third resin layer 13.

One surface 11b of the first resin layer 11 (a surface opposite to a second resin layer 12 side, which may be referred to as a "second surface" in the present specification) is an exposure surface.

One surface 12a of the second resin layer 12 (a surface opposite to a first resin layer 11 side, which may be referred to as a "first surface" in the present specification) is an exposure surface.

A ratio of a thickness of the third resin layer 13 to a thickness of the laminated film 1 is not particularly limited as described above, but is preferably 50% to 70%.

A ratio of a total thickness of the first resin layer 11 and the second resin layer 12 to the thickness of the laminated film 1 is not particularly limited as described above, but is preferably 30% to 50%.

In the laminated film 1, a ratio (thickness ratio) of [the thickness of the first resin layer 11]/[the thickness of the second resin layer 12] is not particularly limited as described above, but is preferably 0.7 to 1.3.

FIG. 2 is a cross-sectional view schematically illustrating another example of the laminated film of the present embodiment.

The laminated film 2 illustrated herein has a structure composed of five resin layers laminated in a thickness direction thereof as a third resin layer 23, in the following order: a 3-1 resin layer 231; a 3-2 resin layer 232; a 3-3 third resin layer 233; a 3-4 resin layer 234; and a 3-5 resin layer 235, which are laminated from the first resin layer 11 side to the second resin layer 12 side.

That is, the laminated film 2 formed by the first resin layer 11, the 3-1 resin layer 231, the 3-2 resin layer 232, the 3-3 resin layer 233, and the 3-4 resin layer 234, the 3-5 resin layer 235, and the second resin layer 12 being laminated in this order in the thickness direction thereof.

The laminated film 2 has the same configuration as the laminated film 1 except that the third resin layer 23 is provided in place of the third resin layer 13.

In the third resin layer 23, both the 3-1 resin layer 231 and the 3-5 resin layer 235 are preferably resin layers other than the resin layer (I). Any one or two or more of the 3-2 resin layer 232, the 3-3 resin layer 233, and the 3-4 resin layer 234 is preferably the resin layer (I), that is, a resin layer having an oxygen barrier property.

A more preferable example of the third resin layer 23 includes a third resin layer configured to include the 3-1 resin layer 231, the 3-2 resin layer 232, the 3-4 resin layer 234, and the 3-5 resin layer 235 all of which are resin layers other than the resin layer (I), to have the 3-3 resin layer 233 that is the resin layer (I), and to have an oxygen barrier property.

In a laminated film 2 including the resin layer (I) as the third resin layer, a ratio of a thickness of the resin layer (I) to a thickness of the laminated film 2 is not particularly limited as described above, but is preferably 4% to 15%. For example, in a case in which the 3-3 resin layer 233 of the third resin layer 23 is the resin layer (I), a ratio of a thickness of the 3-3 resin layer 233 in the laminated film 2 to a thickness of the laminated film 2 is preferably 4% to 15%.

A ratio of a thickness of the third resin layer 23 to a thickness of the laminated film 2 is not particularly limited as described above, but is preferably 50% to 70%.

A ratio of a total thickness of the first resin layer 11 and the second resin layer 12 to the thickness of the laminated film 2 is not particularly limited as described above, but is preferably 30% to 50%.

In the laminated film 2, a ratio (thickness ratio) of [the thickness of the first resin layer 1 1]/[the thickness of the second resin layer 12] is not particularly limited as described above, but is preferably 0.7 to 1.3.

In the laminated film 2, the third resin layer 23 may be a laminated resin layer other than the structure composed of the five resin layers.

For example, the third resin layer 23 has a structure composed of three layers in which the 3-1 resin layer 231 and the 3-2 resin layer 232 are not included, and the 3-3 resin layer 233 may be the resin layer (I).

For example, the third resin layer 23 has a structure composed of two layers in which the 3-1 resin layer 231, the 3-2 resin layer 232, and the 3-4 resin layer 234 are not included, and the 3-3 resin layer 233 may be the resin layer (I).

For example, the third resin layer 23 has a structure composed of three layers in which the 3-4 resin layer 234 and the 3-5 resin layer 235 are not included, and the 3-3 resin layer 233 may be the resin layer (I).

For example, the third resin layer 23 has a structure composed of two layers in which the 3-2 resin layer 232, the 3-4 resin layer 234, and the 3-5 resin layer 235 are not included, and the 3-3 resin layer 233 may be the resin layer (I).

For example, the third resin layer 23 has a structure composed of four layers in which the 3-2 resin layer 232 is not included, and the 3-3 resin layer 233 may be the resin layer (I).

For example, the third resin layer 23 has a structure composed of four layers in which the 3-4 resin layer 234 is not included, and the 3-3 resin layer 233 may be the resin layer (I).

For example, the third resin layer 23 has a structure composed of three layers in which the 3-2 resin layer 232 and the 3-4 resin layer 234 are not included, and the 3-3 resin layer 233 may be the resin layer (I).

The laminated film may include the other layer that does not fall under any of the first resin layer, the second resin layer, and the third resin layer as long as the effects of the present invention are not impaired, it is preferably that no other layer is provided.

The other layer is a layer that contains no polyolefin-based resin, and containing no other layer enables the reusability of the laminated film to be higher.

The total thickness of the laminated film is not particularly limited, but is preferably 100 to 200 $\mu$m, for example.

In the laminated film, it is preferable that all the layers constituting the laminated film (for example, the first resin layer, the second resin layer, and the third resin layer) are non-stretched layers (films). Such a non-stretched laminated film is particularly excellent in formability and is suitable for forming, for example, a deep-drawn package.

<<Method of Producing Laminated Film>>

The laminated film can be produced by, for example, a feed block method of melt-extruding a resin material for forming each layer, a resin composition, or the like by using a number of extruders, a co-extrusion T-die method such as a multi-manifold method, or an air-cooled or water-cooled co-extrusion inflation method.

In addition, the laminated film can be produced by bonding and laminating two or more films for forming any two or more layers in the laminated film, which has been separately prepared in advance, by a thermal (heat) laminating method or other methods without using an adhesive, and as necessary, can also be produced by further laminating layers other than these layers to have a desired arrangement form.

The resin composition used as a material for forming any of layers in the laminated film may be produced by adjusting a kind and content of a component to be contained so that a layer to be formed contains a desired component in a desired content. For example, a ratio of contents of components in the resin composition, which do not vaporize at room temperature, is usually the same as a ratio of contents of the components in a layer formed by using this resin composition.

An example of the resin composition (in the present specification, may be referred to as a "first resin composition") for forming the first resin layer (the first resin layer 11 in the laminated film 1 illustrated in FIG. 1 and the first resin layer 11 in the laminated film 2 illustrated in FIG. 2) includes a resin composition containing the above-mentioned polyolefin-based resin and, as necessary, other components. The other components are the components described above.

An example of the resin composition (in the present specification, may be referred to as a "second resin composition") for forming the second resin layer (the second resin layer 12 in the laminated film 1 illustrated in FIG. 1 and the second resin layer 12 in the laminated film 2 illustrated in FIG. 2) includes a resin composition containing the above-mentioned polyolefin-based resin, and as necessary, other components. The other components are the components described above.

An example of the resin composition (in the present specification, may be referred to as a "third resin composition") for forming the third resin layer (the third resin layer 13 in the laminated film 1 illustrated in FIG. 1; the 3-1 resin layer 231, the 3-2 resin layer 232, the 3-3 resin layer 233, the 3-4 resin layer 234, and the 3-5 resin layer 235 in the laminated film 2 illustrated in FIG. 2) includes a resin composition containing the above-mentioned polyolefin-based resin, and as necessary, other components. The other components are the components described above. In particular, an example of the third resin composition for forming the resin layer (I) among the 3-1 resin layer 231 to the 3-5 resin layer 235 includes a resin composition that contains an ethylene-vinyl alcohol copolymer, the non-vinyl polyolefin-based resin, an ethylene-vinyl alcohol-vinyl acetate copolymer, and as necessary, other components other than these.

«Package»

The laminated film is suitable as a material for a package.

That is, a preferable package includes a package provided with the laminated film.

The package of the present embodiment can be produced by packaging an object to be packaged using the laminated film. During the production of the package, the first resin layer in the laminated film is preferably disposed on the side of the object to be packaged, and the second resin layer is preferably disposed on the side opposite to the object to be packaged to carry out packaging the object to be packaged.

For example, the laminated film is suitable for forming either a lid material or a bottom material of a deep-drawn package. In particular, the laminated film having good formability is particularly suitable for forming a bottom material having a recessed part for forming a storage section.

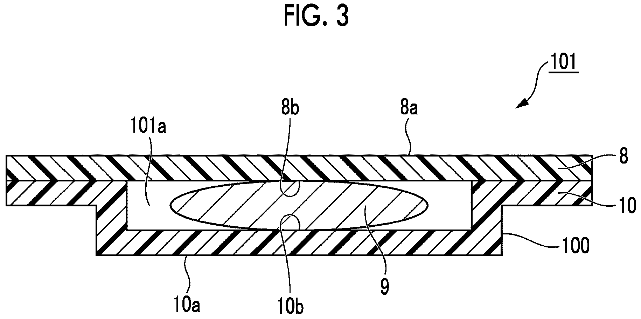

FIG. 3 is a cross-sectional view schematically illustrating an example of a package including the laminated film of the present embodiment.

A package 101 illustrated herein includes a lid material 8 and a bottom material 10, and is a deep-drawn package obtained by deep-draw forming a resin film.

Either the lid material 8 or the bottom material 10m or both the lid material 8 and the bottom material 10 are formed by using the laminated film 1 or the laminated film 2 illustrated in FIG. 1.

In the lid material 8 or the bottom material 10 illustrated in FIG. 3, individual layers in the laminated film 1 or the laminated film 2 for forming the lid material 8 or the bottom material 10 are not distinguished.

A recessed part 100 is formed with the bottom material 10.

One surface (in some cases, may be referred to as a "second surface" in the present specification) 10b of a region excluding the recessed part 100 of the bottom material 10 and one surface (in some cases, may be referred to as a "second surface" in the present specification) of the lid material 8b are both sealing surfaces and face each other.

The package 101 is configured to seal the object to be packaged with the lid material 8 and the bottom material 10. More specifically, the second surface 10b in the region excluding the recessed part 100 of the bottom material 10 and the second surface 8b of the lid material 8 are overlapped with each other and sealed with each other in the region near peripheral edges thereof. As a result, in the region of the recessed part 100 of the bottom material 10, a storage section 101a is formed between the second surface 10b of the bottom material 10 and the second surface 8b of the lid material 8. A storage object 9 is stored in the storage section 101a.

In a case in which the bottom material 10 is formed of the laminated film 1 or the laminated film 2, one surface (second surface) 10b of the bottom material 10 is preferably the same as the second surface 1 1b of the first resin layer 11 in the laminated film 1 or the laminated film 2. The other surface (in some cases, may be referred to as a "first surface" in the present specification) 10a of the bottom material 10 is preferably the same as the first surface 12a of the second resin layer 12 in the laminated film 1 or the laminated film 2.

In a case in which the lid material 8 is formed of the laminated film 1, one surface (second surface) 8b of the lid material 8 is preferably the same as the second surface 11b of the first resin layer 11 in the laminated film 1 or the laminated film 2. The other surface (in some cases, may be referred to as a "first surface" in the present specification) 8a of the lid material 8 is preferably the same as the first surface 12a of the second resin layer 12 in the laminated film 1 or the laminated film 2.

In the storage section 101a of the package 101 illustrated in FIG. 3, although some gaps can be seen between the storage object 9 and the bottom material 10 and between the storage object 9 and the lid material 8, the gaps are not necessary in the package 101 while storing the storage object 9.

A thickness of the bottom material 10 in a flat portion and a thickness of the lid material 8 may be the same as a thickness of the laminated film 1 or the laminated film 2 described above.

Up to this point, the deep-drawn package has been described as an example of the package including the laminated film, but the package including the laminated film is not limited to the deep-drawn package and may be another package.

<<Method of Producing Package>>

The object to be packaged is stored while the storage section for storing the object to be packaged (in other words, the storage object) is formed by using the laminated films or the laminated film and another resin film other than the laminated film, and regions other than the storage section formed by these films are then heat-sealed; thereby the package can be produced. In this case, the adhesion of the laminated film (particularly the second resin layer) to a heating plate in a heat-sealing device is prevented.

EXAMPLES

Hereinafter, the present invention will be described in more detail by way of specific Examples. However, the present invention is not intended to be limited to the following Examples.

[Example 1]

<<Production of Laminated Film>>

A laminated film having the configuration illustrated in FIG. 1 was produced through the procedure illustrated below.

That is, low density polyethylene (LDPE) ("UBE polyethylene (registered trademark) F222NH" manufactured by UBE Corporation, a density of 0.922 g/cm$^3$) was prepared as a resin for forming a first resin layer.

High density polyethylene (HDPE) ("Nipolon Hard (registered trademark) 4010" manufactured by Tosoh Corporation, a density of 0.964 g/cm$^3$, a melt mass-flow rate of 5.4 g/10 min) was prepared as a resin for forming a second resin layer. In the present specification, this HDPE may be referred to as a "HDPE (1)" in some cases.

Metallocene-catalyzed linear low density polyethylene (mLLDPE) ("UMERIT (registered trademark) 1520F" manufactured by UBE Corporation, a density of 0.913 g/cm$^3$) was prepared as a resin for forming a third resin layer.

By co-extruding the LDPE, the mLLDPE, and the HDPE (1) in this order, a laminated film (a thickness of 150 μm) was obtained by laminating the first resin layer (a thickness of 30 μm), the third resin layer (a thickness of 90 μm), and the second resin layer (a thickness of 30 μm) in a thickness direction in this order.

«Evaluation of Laminated Film»

<Calculation of E'(110)/E'(100) Value of Second Resin Layer>

The HDPE (1) was subjected to extrusion forming to obtain a test resin film (a thickness of 30 μm).

A test piece (1) having a size of 7 cm × 1 cm was cut out from this test resin film, and the test piece (1) was placed in a sample holder so that a length of a measurement target portion was 2 cm.

Next, E'(100) and E'(110) were measured by using a dynamic mechanical analyzer ("DMS6100" manufactured by Seiko Instruments Inc.) in a tensile mode within a temperature range of 20°C to 130°C, under conditions of a displacement of 5 μm, a vibration frequency of 1 Hz, and a temperature rising rate of 5°C/min to calculate a E'(110)/E'(100) value. The results are illustrated in Table 1.

<Measurement of Puncture Strength of Laminated Film>

A tip portion of a needle that has a curvature radius of the tip portion of 0.5 mm was put into the laminated film obtained as described above from the second resin layer side, and the tip of the needle was vertically pushed against the laminated film at a speed of 500 mm/min. When the needle penetrated the laminated film, a load applied to the needle was read, and this read out value was employed as the puncture strength of the laminated film. The results are illustrated in Table 1.

[Example 2]

<<Production of Laminated Film>>

A laminated film was produced in the same manner as in Example 1, except that HDPE ("Nipolon Hard (registered trademark) 1000" manufactured by Tosoh Corporation, a density of 0.964 g/cm$^3$, a melt mass-flow rate of 20 g/10 min) of a different kind from the HDPE (1) was used in place of the HDPE (1) ("Nipolon Hard (registered trademark) 4010" manufactured by Tosoh Corporation, a density of 0.964 g/cm$^3$, a melt mass-flow rate of 5.4 g/10 min) during the formation of the second resin layer. In the present specification, HDPE used in this example may be referred to as a "HDPE (2)".

«Evaluation of Laminated Film»

The laminated film obtained above was evaluated by the same method as in Example 1. The results are illustrated in Table 1.

In Table 1, the description of "-" in the column "Evaluation result" means that the item has not been evaluated.

[Example 3]

A laminated film was produced in the same manner as in Example 1, except that the third resin composition was used in place of mLLDPE ("UMERIT (registered trademark) 1520F" manufactured by UBE Corporation) during the formation of the third resin layer. This third resin composition was obtained by kneading mLLDPE ("UMERIT (registered trademark) 1520F" manufactured by UBE Corporation) (90 parts by mass) and an elastomer ("TAFMER (registered trademark) BL3450M" manufactured by Mitsui Chemicals, Inc.) (10 parts by mass) at 200°C for 10 minutes.

«Evaluation of Laminated Film»

The laminated film obtained above was evaluated by the same method as in Example 1. The results are illustrated in Table 1.

[Example 4]

A laminated film was produced in the same manner as in Example 1, except that the second resin composition was used in place of the HDPE (1) ("Nipolon Hard (registered trademark) 4010" manufactured by Tosoh Corporation, a density of 0.964 g/cm$^3$) during the formation of the second resin layer. This second resin composition was obtained by kneading the HDPE (1) ("Nipolon Hard (registered trademark) 4010" manufactured by Tosoh Corporation) (60 parts by mass) and LDPE ("UBE polyethylene (registered trademark) F222NH" manufactured by UBE Corporation) (40 parts by mass) at 200°C for 10 minutes.

«Evaluation of Laminated Film»

The laminated film obtained above was evaluated by the same method as in Example 1. The results are illustrated in Table 2.

[Example 5]

<<Production of Laminated Film>>

A laminated film (the non-irradiated laminated film) was produced in the same manner as in Example 1, except that mLLDPE ("UMERIT (registered trademark) 1520F" manufactured by UBE Corporation) was used in place of the HDPE (1) ("Nipolon Hard (registered trademark) 4010" manufactured by Tosoh Corporation, a density of 0.964 g/cm$^3$) during the formation of the second resin layer.
Next, the second resin layer side of the laminated film was irradiated with an electron beam (EB). At this time, an absorption dose was set to 50 kGy and an acceleration voltage was set to 150 kV. The laminated film thus obtained was used as a laminated film of this Example.

«Evaluation of Laminated Film»

<Calculation of E'(110)/E'(100) Value of Second Resin Layer>

E'(100) and E'(110) of each of the laminated films thus obtained were measured by the same method as in the case of Example 1, and each E'(110)/E'(100) value was calculated. The results are illustrated in Table 2.

<Measurement of Puncture Strength of Laminated Film>

The puncture strength of each of the laminated films thus obtained was evaluated by the same method as in Example 1. The results are illustrated in Table 2.

<Measurement of Gel Fraction of Laminated Film>

The gel fraction of each of the laminated films thus obtained was measured in accordance with JIS K 6769.
That is, a test piece (2) having a size of 3 cm × 3 cm was cut out from each of the laminated films, and the test piece (2) was wrapped with a stainless steel wire mesh of 400 mesh (100 g). The test piece (2) wrapped in this stainless steel wire mesh was immersed in xylene (18 mL) at 110°C for 24 hours.
Next, the test piece (2) after immersion was taken out from the xylene together with the stainless steel wire mesh, and was further vacuum-dried as it was at 110°C for 24 hours under a pressure of 1.7 kPa. The mass of the obtained dried product was obtained, and the gel fraction was calculated. The results are illustrated in Table 2.

<Measurement of Displacement Temperature of 2000 μm in Laminated Film>

By using a thermomechanical analyzer ("EXSTAR 6000" manufactured by Seiko Instruments Inc.), the laminated film obtained above was subjected to thermomechanical analysis in accordance with JIS K 7196, and a displacement temperature of 2000 μm was obtained from the obtained thermomechanical analysis curve. The results are illustrated in Table 2.

[Comparative Example 1]

<<Production of Laminated Film>>

Low density polyethylene (LDPE) ("UBE polyethylene (registered trademark) F222NH" manufactured by UBE Corporation, a density of 0.922 g/cm$^3$) was prepared as a resin for forming a sealant layer.

Metallocene-catalyzed linear low density polyethylene (mLLDPE) ("UMERIT (registered trademark) 1520F" manufactured by UBE Corporation) was prepared as a resin for forming an intermediate layer.

A modified polyolefin resin ("NF536" manufactured by Mitsui Chemicals, Inc.) was prepared as a resin for forming an adhesive layer.

6-Nylon (Ny) ("1022B" manufactured by Ube Corporation) was prepared as a resin for forming a strength-retaining layer and an outer layer.

The LDPE, the mLLDPE, the modified polyolefin resin, the Ny, the modified polyolefin resin, and the Ny were co-extruded in this order to form a laminated film (a thickness of 150 μm) composed of a sealant layer (a thickness of 20 μm), an intermediate layer (a thickness of 60 μm), an adhesive layer (a thickness of 15 μm), a strength-retaining layer (a thickness of 30 μm), an adhesive layer (a thickness of 15 μm), and an outer layer (a thickness of 10 μm), which are laminated in a thickness direction in this order.

«Evaluation of Laminated Film»

<Calculation of E'(110)/E'(100) Value of Outer Layer>

E'(100) and E'(110) of an outer layer in the laminated film thus obtained were measured by the same method as in the case of Example 1, and E'(110)/E'(100) value was calculated. The result is illustrated in Table 3.

<Measurement of Puncture Strength of Laminated Film>

The puncture strength of each of the laminated films thus obtained was evaluated by the same method as in Example 1. The result is illustrated in Table 3.

[Table 1]

| | | | Example 1 | Example 2 | Example 3 |
|---|---|---|---|---|---|
| Configuration of laminated film | Second resin layer | Contained component (% bv mass) | HDPE (1) (100) | HDPE (2) (100) | HDPE (1) (100) |
| | | Thickness (μm) | 30 | 30 | 30 |
| | Third resin layer | Contained component (% bv mass) | mLLDPE (100) | mLLDPE (100) | mLLDPE (90) Elastomer (10) |
| | | Thickness (μm) | 90 | 90 | 90 |
| | First resin layer | Contained component (% bv mass) | LDPE (100) | LDPE (100) | LDPE (100) |
| | | Thickness (μm) | 30 | 30 | 30 |

(continued)

| | | Example 1 | Example 2 | Example 3 |
|---|---|---|---|---|
| Evaluation result | E'(100) (Pa) of second resin layer | $1.9 \times 10^8$ | $1.4 \times 10^8$ | $1.9 \times 10^8$ |
| | E'(110) (Pa) of second resin layer | $1.4 \times 10^8$ | $9.6 \times 10^7$ | $1.4 \times 10^8$ |
| | E'(110)/E'(100) value of second resin layer | 0.7 | 0.69 | 0.7 |
| | Puncture strength (N) of laminated film | 8.5 | 7.4 | 9.0 |
| | Gel fraction (%) of laminated film | - | - | - |
| | Displacement temperature (°C) of 2000 $\mu$m of laminated film | - | - | - |

[Table 2]

| | | | Example 4 | Example 5 |
|---|---|---|---|---|
| Configuration of laminated film | Second resin layer | Contained component (% by mass) | HDPE (1) (60) LDPE (40) | EB irradiation mLLDPE (100) |
| | | Thickness ($\mu$m) | 30 | 30 |
| | Third resin layer | Contained component (% by mass) | mLLDPE (100) | mLLDPE (100) |
| | | Thickness ($\mu$m) | 90 | 90 |
| | First resin layer | Contained component (% by mass) | LDPE (100) | LDPE (100) |
| | | Thickness ($\mu$m) | 30 | 30 |
| Evaluation result | E'(100) (Pa) of second resin layer | | $1.3 \times 10^8$ | $1.8 \times 10^7$ |
| | E'(110) (Pa) of second resin layer | | $8.2 \times 10^7$ | $4.6 \times 10^6$ |
| | E'(110)/E'(100) value of second resin layer | | 0.66 | 0.25 |
| | Puncture strength (N) of laminated film | | 8.0 | 108 |
| | Gel fraction (%) of laminated film | | - | 42 |
| | Displacement temperature (°C) of 2000 $\mu$m of laminated film | | - | 125 |

[Table 3]

| | | | Comparative Example 1 |
|---|---|---|---|
| Configuration of laminated film | Outer layer | Contained component (% by mass) | Ny (100) |
| | | Thickness (μm) | 10 |
| | Adhesive layer | Contained component (% by mass) | Modified polyolefin resin (100) |
| | | Thickness (μm) | 15 |
| | Strength-retaining layer | Contained component (% by mass) | Ny (100) |
| | | Thickness (μm) | 30 |
| | Adhesive layer | Contained component (% by mass) | Modified polyolefin resin (100) |
| | | Thickness (μm) | 15 |
| | Intermediate layer | Contained component (% by mass) | mLLDPE (100) |
| | | Thickness (μm) | 60 |
| | Sealant layer | Contained component (% by mass) | LDPE (100) |
| | | Thickness (μm) | 20 |
| Evaluation result | E'(110)/E'(100) value of outer layer | | 0.85 |
| | Puncture strength (N) of laminated film | | 121 |
| | Gel fraction (%) of laminated film | | - |
| | Displacement temperature (°C) of 2000 μm of laminated film | | - |

As is clear from the above results, in each of Examples 1 to 5, the E'(1 10)/E'(100) value of the second resin layer was equal to or more than 0.25 (0.25 to 0.7), and the heat resistance of the second resin layer was sufficiently large to be recognized as being sufficiently high. Among these, in each of Examples 1 to 4, the E'(1 10)/E'(100) value of the second resin layer is particularly large at 0.66 to 0.7, and the effect of that the second resin layer contained HDPE was high.

In each of the laminated films obtained in Examples 1 to 5, all of the first resin layer to the third resin layer contained PE, and the main contained component was polyolefin-based resins of the same kind, so that the reusability was high.

A resin layer (resin film), which is the same as the second resin layer in Example 5 except that EB irradiation was not performed was separately prepared, E'(100) and E'(110) thereof were measured, the E'(110)/E'(100) value was calculated, and the resultant value was 0.11. As described above, in Example 5, the E'(110)/E'(100) value of the second resin layer was increased by the effect of EB irradiation.

Furthermore, in Example 5, the gel fraction of the laminated film was 42%, the displacement temperature of 2000 μm of the laminated film was 125°C, and the effect of EB irradiation performed on the second resin layer was also recognized herein.

In each of Examples 1 to 5, the puncture strength of the laminated film was equal to or more than 7.4 N (7.4 to 10.8 N), which was sufficiently large. As described above, the laminated films of Examples 1 to 5 had sufficiently high pinhole resistance and high strength even though a polyamide such as Ny was not used.

In Examples 1 to 5, all of the first resin layer to the third resin layer were non-stretched layers (films), and the laminated films of these examples were excellent in formability.

The laminated film obtained in Comparative Example 1 had sufficient heat resistance because the outer layer contained Ny, and had sufficiently high strength because the strength-retaining layer contained Ny. However, the sealant layer and the intermediate layer contained PE, and the adhesive layer contained a modified polyolefin resin. As described above, the laminated film obtained in Comparative Example 1 included the layers composed of resins of which the main components contained were different from each other, and the reusability was low.

[Example 6]

<<Production of Laminated Film>>

A laminated film having the configuration illustrated in FIG. 2 was produced through the procedure illustrated below.

That is, low density polyethylene (LDPE) ("UBE polyethylene (registered trademark) F222NH" manufactured by UBE Corporation, a density of 0.922 g/cm$^3$) was prepared as a resin for forming a first resin layer.

High density polyethylene (HDPE) ("Nipolon Hard (registered trademark) 4010" manufactured by Tosoh Corporation, a density of 0.964 g/cm$^3$, a melt mass-flow rate of 5.4 g/10 min, HDPE (1)) was prepared as a resin for forming a second resin layer.

Metallocene-catalyzed linear low density polyethylene (mLLDPE) ("UMERIT (registered trademark) 1520F" manufactured by UBE Corporation, a density of 0.913 g/cm$^3$) was prepared as a resin for forming a 3-1 resin layer, a 3-2 resin layer, a 3-3 resin layer, a 3-4 resin layer, and a 3-5 resin layer.

An ethylene-vinyl alcohol-vinyl acetate copolymer (EVA partially saponified product) ("Mersen (registered trademark) -H3051R" manufactured by Tosoh Corporation) and an ethylene-vinyl alcohol copolymer (EVOH) ("Eval (registered trademark) E105B" manufactured by KURARAY CO., LTD.) were prepared as a resin for forming the 3-3 resin layer.

The mLLDPE (40 parts by mass), the EVA partially saponified product (30 parts by mass), and the EVOH (30 parts by mass) were kneaded at 200°C for 10 minutes to produce a third resin composition.

By co-extruding the LDPE, the mLLDPE, the mLLDPE, the third resin composition, a laminated film (a thickness of 150 μm) composed of the mLLDPE, the mLLDPE, and the HDPE (1) in this order, the first resin layer (a thickness of 30 μm), the 3-1 resin layer (a thickness of 15 μm), the 3-2 resin layer (a thickness of 30 μm), the 3-3 resin layer (a thickness of 15 μm), the 3-4 resin layer (a thickness of 15 μm), the 3-5 resin layer (a thickness of 15 μm), and a second resin layer (a thickness of 30 μm), which were laminated in the thickness direction in this order, was obtained.

«Evaluation of Laminated Film»

<Measurement of Puncture Strength of Laminated Film>

The laminated film obtained above was evaluated by the same method as in Example 1. The results are illustrated in Table 4.

<Measurement of Haze of Laminated Film>

The haze on the second resin layer side of the laminated film was externally measured in accordance with JIS K 7136:2000. The results are illustrated in Table 4.

<Measurement of Oxygen Permeation Amount of Laminated Film>

The oxygen permeation amount of the laminated film obtained above was measured under conditions of a temperature of 23°C and a relative humidity of 50% in accordance with JIS K 7126-2:2006. The results are illustrated in Table 4.

[Example 7]

<<Production of Laminated Film>>

A laminated film was produced in the same manner as in the case of Example 6, except that the mLLDPE (25 parts by mass), the EVA partially saponified product (30 parts by mass), the EVOH (45 parts by mass) were kneaded at 200°C for 10 minutes in place of that the mLLDPE (40 parts by mass), the EVA partially saponified product (30 parts by mass), and the EVOH (30 parts by mass) were kneaded at 200°C for 10 minutes during the production of the third resin composition.

This laminated film was a laminated film (a thickness of 150 μm) composed of the first resin layer (a thickness of 30 μm), the 3-1 resin layer (a thickness of 15 μm), the 3-2 resin layer (a thickness of 30 μm), the 3-3 resin layer (a thickness of 15 μm), the 3-4 resin layer (a thickness of 15 μm), the 3-5 resin layer (a thickness of 15 μm), and the second resin layer (a thickness of 30μm), which were laminated in this order in the thickness direction thereof.

«Evaluation of Laminated Film»

The laminated film obtained above was evaluated by the same method as in Example 6. The results are illustrated in Table 4.

[Example 8]

<<Production of Laminated Film»

A laminated film was produced in the same manner as in the case of Example 6, except that the mLLDPE (10 parts by mass), the EVA partially saponified product (30 parts by mass), the EVOH (60 parts by mass) were kneaded at 200°C for 10 minutes in place of that the mLLDPE (40 parts by mass), the EVA partially saponified product (30 parts by mass), and the EVOH (30 parts by mass) were kneaded at 200°C for 10 minutes during the production of the third resin composition.

This laminated film was a laminated film (a thickness of 150 $\mu$m) composed of the first resin layer (a thickness of 30 $\mu$m), the 3-1 resin layer (a thickness of 15 $\mu$m), the 3-2 resin layer (a thickness of 30 $\mu$m), the 3-3 resin layer (a thickness of 15 $\mu$m), the 3-4 resin layer (a thickness of 15 $\mu$m), the 3-5 resin layer (a thickness of 15 $\mu$m), and the second resin layer (a thickness of 30$\mu$m), which were laminated in this order in the thickness direction thereof.

«Evaluation of Laminated Film»

The laminated film obtained above was evaluated by the same method as in Example 6. The results are illustrated in Table 4.

[Example 9]

<<Production of Laminated Film>>

A laminated film was produced in the same manner as in the case of Example 6, except that the LDPE (10 parts by mass), the EVA partially saponified product (30 parts by mass), the EVOH (60 parts by mass) were kneaded at 200°C for 10 minutes in place of that the mLLDPE (40 parts by mass), the EVA partially saponified product (30 parts by mass), and the EVOH (30 parts by mass) were kneaded at 200°C for 10 minutes during the production of the third resin composition.

This laminated film was a laminated film (a thickness of 150 $\mu$m) composed of the first resin layer (a thickness of 30 $\mu$m), the 3-1 resin layer (a thickness of 15 $\mu$m), the 3-2 resin layer (a thickness of 30 $\mu$m), the 3-3 resin layer (a thickness of 15 $\mu$m), the 3-4 resin layer (a thickness of 15 $\mu$m), the 3-5 resin layer (a thickness of 15 $\mu$m), and the second resin layer (a thickness of 30$\mu$m), which were laminated in this order in the thickness direction thereof.

«Evaluation of Laminated Film»

The laminated film obtained above was evaluated by the same method as in Example 6. The results are illustrated in Table 5.

[Example 10]

<<Production of Laminated Film>>

A laminated film was produced in the same manner as in the case of Example 9, except that the extrusion amount of the mLLDPE was increased and the extrusion amount of the third resin composition was reduced.

This laminated film was a laminated film (a thickness of 150 $\mu$m) composed of the first resin layer (a thickness of 37.5 $\mu$m), the 3-1 resin layer (a thickness of 15 $\mu$m), the 3-2 resin layer (a thickness of 30 $\mu$m), the 3-3 resin layer (a thickness of 7.5 $\mu$m), the 3-4 resin layer (a thickness of 15 $\mu$m), the 3-5 resin layer (a thickness of 15 $\mu$m), and the second resin layer (a thickness of 30$\mu$m), which were laminated in this order in the thickness direction thereof.

«Evaluation of Laminated Film»

The laminated film obtained above was evaluated by the same method as in Example 6. The results are illustrated in Table 5.

[Example 11]

<<Production of Laminated Film>>

A laminated film was produced in the same manner as in the case of Example 6, except that the mLLDPE was used in place of the third resin composition.

This laminated film was a laminated film (a thickness of 150 $\mu$m) composed of the first resin layer (a thickness of 30 $\mu$m), the 3-1 resin layer (a thickness of 15 $\mu$m), the 3-2 resin layer (a thickness of 30 $\mu$m), the 3-3 resin layer (a thickness of 15 $\mu$m), the 3-4 resin layer (a thickness of 15 $\mu$m), the 3-5 resin layer (a thickness of 15 $\mu$m), and the second resin layer (a thickness of 30$\mu$m), which were laminated in this order in the thickness direction thereof.

«Evaluation of Laminated Film»

The laminated film obtained above was evaluated by the same method as in Example 6. The results are illustrated in Table 5.

[Table 4]

| | | | Example 6 | Example 7 | Example 8 |
|---|---|---|---|---|---|
| Configuration of laminated film | Second resin layer | Contained component (% by mass) | HDPE (1) (100) | HDPE (1) (100) | HDPE (1) (100) |
| | | Thickness ($\mu$m) | 30 | 30 | 30 |
| | 3-5 resin layer | Contained component (% by mass) | mLLDPE (100) | mLLDPE (100) | mLLDPE (100) |
| | | Thickness ($\mu$m) | 15 | 15 | 15 |
| | 3-4 resin layer | Contained component (% by mass) | mLLDPE (100) | mLLDPE (100) | mLLDPE (100) |
| | | Thickness ($\mu$m) | 15 | 15 | 15 |
| | 3-3 resin layer | Contained component (% by mass) | mLLDPE/ EVA partially saponified product/EVOH (40/30/30) | mLLDPE/ EVA partially saponified product/EVOH (25/30/45) | mLLDPE/ EVA partially saponified product/EVOH (10/30/60) |
| | | Thickness ($\mu$m) | 15 | 15 | 15 |
| | 3-2 resin layer | Contained component (% by mass) | mLLDPE (100) | mLLDPE (100) | mLLDPE (100) |
| | | Thickness ($\mu$m) | 30 | 30 | 30 |
| | 3-1 resin layer | Contained component (% by mass) | mLLDPE (100) | mLLDPE (100) | mLLDPE (100) |
| | | Thickness ($\mu$m) | 15 | 15 | 15 |
| | First resin layer | Contained component (% by mass) | LDPE (100) | LDPE (100) | LDPE (100) |
| | | Thickness ($\mu$m) | 30 | 30 | 30 |

(continued)

|  |  |  | Example 6 | Example 7 | Example 8 |
|---|---|---|---|---|---|
| Evaluation result | E'(100) (Pa) of second resin layer | | $1.9 \times 10^8$ | $1.9 \times 10^8$ | $1.9 \times 10^8$ |
| | E'(110) (Pa) of second resin layer | | $1.4 \times 10^8$ | $1.4 \times 10^8$ | $1.4 \times 10^8$ |
| | E'(110)/E'(100) value of second resin layer | | 0.7 | 0.7 | 0.7 |
| | Puncture strength (N) of laminated film | | 7.7 | 7.5 | 7.8 |
| | Gel fraction (%) of laminated film | | - | - | - |
| | Displacement temperature (°C) of 2000 $\mu$m of laminated film | | - | - | - |
| | Haze (%) | | 22.2 | 25.7 | 18.6 |
| | Oxygen permeation amount (ml/(m$^2$·24h·atm)) | | 452.2 | 19.1 | 12.2 |

[Table 5]

| | | | | Example 9 | Example 10 | Example 11 |
|---|---|---|---|---|---|---|
| Configuration of laminated film | Second resin layer | | Contained component (% by mass) | HDPE (1) (100) | HDPE (1) (100) | HDPE (1) (100) |
| | | | Thickness (μm) | 30 | 30 | 30 |
| | 3-5 resin layer | | Contained component (% by mass) | mLLDPE (100) | mLLDPE (100) | mLLDPE (100) |
| | | | Thickness (μm) | 15 | 15 | 15 |
| | 3-4 resin layer | | Contained component (% by mass) | mLLDPE (100) | mLLDPE (100) | mLLDPE (100) |
| | | | Thickness (μm) | 15 | 15 | 15 |
| | 3-3 resin layer | | Contained component (% by mass) | LDPE/ EVA partially saponified product/ EVOH (10/30/60) | LDPE/ EVA partially saponified product/ EVOH (10/30/60) | mLLDPE (100) |
| | | | Thickness (μm) | 15 | 7.5 | 15 |
| | 3-2 resin layer | | Contained component (% by mass) | mLLDPE (100) | mLLDPE (100) | mLLDPE (100) |
| | | | Thickness (μm) | 30 | 30 | 30 |
| | 3-1 resin layer | | Contained component (% by mass) | mLLDPE (100) | mLLDPE (100) | mLLDPE (100) |
| | | | Thickness (μm) | 15 | 15 | 15 |
| | First resin layer | | Contained component (% by mass) | LDPE (100) | LDPE (100) | LDPE (100) |
| | | | Thickness (μm) | 30 | 37.5 | 30 |
| Evaluation result | E'(100) (Pa) of second resin layer | | | $1.9 \times 10^8$ | $1.9 \times 10^8$ | $1.9 \times 10^8$ |
| | E'(110) (Pa) of second resin layer | | | $1.4 \times 10^8$ | $1.4 \times 10^8$ | $1.4 \times 10^8$ |
| | E'(110)/E'(100) value of second resin layer | | | 0.7 | 0.7 | 0.7 |
| | Puncture strength (N) of laminated film | | | 7.6 | 7.9 | 8.5 |
| | Gel fraction (%) of laminated film | | | - | - | - |
| | Displacement temperature (°C) of 2000 μm of laminated film | | | - | - | - |
| | Haze (%) | | | 18.9 | 16.5 | 16.6 |
| | Oxygen permeation amount (ml/ (m²·24h·atm)) | | | 9.4 | 21.3 | - |

As is clear from the above results, in each of Examples 6 to 11, the E'(1 10)/E'(100) value of the second resin layer was 0.7, and the heat resistance of the second resin layer was sufficiently large to be recognized as being sufficiently high.

In each of the laminated films obtained in Examples 6 to 11, all of the first resin layer to the third resin layer contained PE, and the main contained component was polyolefin-based resins of the same kind, so that the reusability was high.

In each of Examples 6 to 11, the puncture strength of the laminated film was equal to or more than 7.5 N (7.5 to 8.5 N), which was sufficiently large. As described above, the laminated films of Examples 6 to 11 had sufficiently high pinhole resistance and high strength even though a polyamide such as Ny was not used.

The oxygen permeation amount of the laminated film obtained in each of Examples 6 to 10 among Examples 6 to 11 was equal to or less than 452.2 ml/(m$^2$·24h·atm) (9.4 to 452.2 ml/(m$^2$·24h·atm)), and the laminated film obtained in each of Examples 6 to 10 had an oxygen barrier property. This was because the 3-3 resin layer in the laminated film was the resin layer (I).

Among these, the oxygen permeation amount of the laminated film obtained in each of Examples 7 to 10 was equal to or less than 21.3 ml/(m$^2$·24h·atm) (9.4 to 21.3 ml/(m$^2$·24h·atm)), and the laminated film obtained in each of Examples 7 to 10 had a higher oxygen barrier property. This was because the uniformity and the oxygen barrier property of the 3-3 resin layer in the laminated film were high.

In Examples 6 to 11, the haze of the laminated film was equal to or less than 25.7% (16.5% to 25.7%). Among these, the haze of the laminated film obtained in each of Examples 8 to 10 was equal to or less than 18.9% (16.5% to 18.9%), which was a low level. This was because the uniformity of the 3-3 resin layer in the laminated film was high, which is consistent with the high oxygen barrier property of the laminated film.

In Examples 6 to 11, all of the first resin layer to the third resin layer were non-stretched layers (films), and the laminated films of these examples were excellent in formability.

Industrial Applicability

The present invention can be used to produce various packages that can be reused after use.

Reference Signs List

1, 2: Laminated film
11: First resin layer
11b: Second surface of first resin layer 11
12: Second resin layer
12a: First surface of second resin layer 12
13, 23: Third resin layer
231: 3-1 resin layer
232: 3-2 resin layer
233: 3-3 resin layer
234: 3-4 resin layer
235: 3-5 resin layer
100: Recessed part
101: Package (deep-drawn package)
101a: Storage section
8: Lid material
8a: First surface of lid material 8
8b: Second surface of lid material 8
9: Storage object
10: Bottom material
10a: First surface of bottom material 10
10b: Second surface of bottom material 10

Claims

1. A laminated film comprising:

a first resin layer; and
a second resin layer,
wherein the first resin layer and the second resin layer each contain polyolefin-based resins of the same kind, and in a case in which a dynamic mechanical analysis is performed on the second resin layer to measure an elastic modulus E'(100) at 100°C and an elastic modulus E'(110) at 110°C at a vibration frequency of 1 Hz, a value of E'(110)/E'(100) is equal to or more than 0.2.

2. The laminated film according to claim 1,
wherein the laminated film has a gel fraction of equal to or more than 30%.

3. The laminated film according to claim 1 or 2,
wherein the laminated film is irradiated with an electron beam under a condition of an absorption dose of 20 to 300 kGy.

4. The laminated film according to any one of claims 1 to 3,
wherein in a case in which a thermomechanical analysis is performed on the laminated film, a temperature at which a displacement is 2000 μm is equal to or higher than 120°C.

5. The laminated film according to any one of claims 1 to 4, further comprising:

a third resin layer between the first resin layer and the second resin layer,
wherein the first resin layer, the second resin layer, and the third resin layer each contain polyolefin-based resins of the same kind.

6. The laminated film according to claim 5,

wherein the third resin layer is composed of a plurality of layers including three or more layers, at least one of the layers containing the polyolefin-based resin, an ethylene-vinyl alcohol copolymer, and an ethylene-vinyl alcohol-vinyl acetate copolymer, and
the polyolefin-based resin does not correspond to any of an ethylene-vinyl alcohol copolymer, an ethylene-vinyl acetate copolymer, and an ethylene-vinyl alcohol-vinyl acetate copolymer.

7. The laminated film according to any one of claims 1 to 6,
wherein the polyolefin-based resin is a polyethylene-based resin.

8. The laminated film according to any one of claims 1 to 7,
wherein in a case in which a tip portion of a needle that has 0.5 mm of a curvature radius of the tip portion is perpendicularly put into the laminated film at a speed of 500 mm/min, a load applied to the needle at a moment when the needle penetrates the laminated film is equal to or more than 7 N.

9. The laminated film according to claim 1,
wherein the value of E'(110)/E'(100) is equal to or more than 0.5.

10. The laminated film according to claim 1 or 9,
wherein the second resin layer contains high density polyethylene.

FIG. 1

FIG. 2

# FIG. 3

## INTERNATIONAL SEARCH REPORT

| International application No. |
| --- |
| PCT/JP2021/013264 |

**A. CLASSIFICATION OF SUBJECT MATTER**
B32B 27/32(2006.01)i; B65D 65/40(2006.01)i; B32B 7/022(2019.01)i
FI: B32B27/32 E; B65D65/40 D; B32B7/022
According to International Patent Classification (IPC) or to both national classification and IPC

**B. FIELDS SEARCHED**

Minimum documentation searched (classification system followed by classification symbols)
B32B1/00-43/00; B65D65/40

Documentation searched other than minimum documentation to the extent that such documents are included in the fields searched
Published examined utility model applications of Japan        1922–1996
Published unexamined utility model applications of Japan      1971–2021
Registered utility model specifications of Japan              1996–2021
Published registered utility model applications of Japan      1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 7-251490 A (COLGATE-PALMOLIVE CO.) 03 October 1995 (1995-10-03) claims, paragraphs [0001], [0020]-[0021], [0026], fig. 1 | 1, 4-5, 7-10 |
| Y | claims, paragraphs [0001], [0020]-[0021], [0026], fig. 1 | 6 |
| X | WO 2018/221495 A1 (DAINIPPON PRINTING CO., LTD.) 06 December 2018 (2018-12-06) paragraphs [0001], [0030]-[0031], [0045]-[0047], [0050], [0053], [0058], [0092], claims, drawings | 1-5, 7-10 |
| Y | paragraphs [0001], [0030]-[0031], [0045]-[0047], [0050], [0053], [0058], [0092], claims, drawings | 6 |
| Y | JP 2013-39691 A (NIHON TETRA PAK KK) 28 February 2013 (2013-02-28) claims | 6 |
| A | JP 2007-59167 A (MATSUSHITA ELECTRIC INDUSTRIAL CO., LTD.) 08 March 2007 (2007-03-08) entire text | 1-10 |

☐ Further documents are listed in the continuation of Box C.    ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 03 June 2021 (03.06.2021) | 15 June 2021 (15.06.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2021/013264 |

| Patent Documents referred in the Report | Publication Date | Patent Family | Publication Date |
| --- | --- | --- | --- |
| JP 7-251490 A | 03 Oct. 1995 | US 5491011 A<br>fig. 1, column 1,<br>lines 9-16, column 3,<br>line 55 to column 4,<br>line 2, column 4,<br>lines 42-52, claims<br>EP 665102 A1<br>DE 69500245 T2<br>AT 152042 T<br>CA 2140978 A1 | |
| WO 2018/221495 A1 | 06 Dec. 2018 | JP 2018-202617 A<br>JP 2018-202618 A | |
| JP 2013-39691 A | 28 Feb. 2013 | (Family: none) | |
| JP 2007-59167 A | 08 Mar. 2007 | (Family: none) | |

Form PCT/ISA/210 (patent family annex) (January 2015)

**EP 4 129 672 A1**

**REFERENCES CITED IN THE DESCRIPTION**

**Patent documents cited in the description**

- JP 2020060062 A
- JP 2020209113 A
- JP 2019189333 A